(19) **Europäisches Patentamt**
**European Patent Office**
**Office européen des brevets**

(11) **EP 4 572 240 A1**

(12) **EUROPEAN PATENT APPLICATION**

(43) Date of publication:
**18.06.2025 Bulletin 2025/25**

(51) International Patent Classification (IPC):
**H04L 12/413** (2006.01)   **H04L 25/02** (2006.01)
**H04L 12/40** (2006.01)

(21) Application number: **23217099.3**

(22) Date of filing: **15.12.2023**

(52) Cooperative Patent Classification (CPC):
**H04L 12/4135; H04L 12/40182;** H04L 25/0272;
H04L 2012/40215

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **CARIAD SE
38440 Wolfsburg (DE)**

(72) Inventors:
• **Sami, Dr. Akin
30159 Hannover (DE)**
• **Engelmann, Dr. Anna
38302 Wolfenbüttel (DE)**

(74) Representative: **Hofstetter, Schurack & Partner
Patent- und Rechtsanwaltskanzlei
PartG mbB
Balanstraße 73 / Haus 31A
81541 München (DE)**

(54) **CAN-BUS-SYSTEM FOR TRANSMITTING DATA BETWEEN CAN-NODES**

(57)     The invention relates to a CAN-bus-system for transmitting data between CAN-nodes, comprising at least the following components:
- a CAN-bus with a plurality of communication-conductors;
- at least two CAN-nodes which are in a data-transmitting connection by means of the communication-conductors; and
- at least one resistor between each two of the communication-conductors. The CAN-bus-system is characterized in particular by the fact that the CAN-bus comprises at least three communication-conductors.

A CAN-bus-system with at least three communication-conductors is provided, which makes it possible to send communication messages with more than three different symbols.

**Fig. 2**

EP 4 572 240 A1

**Description**

The invention relates to a CAN-bus-system for transmitting data between CAN-nodes, an operating method for operating such a CAN-bus-system, and a motor vehicle with such a CAN-bus-system.

Multi-drop communication systems, like a Controller Area Network [CAN] that is based on the Carrier Sense Multiple Access/Collision Resolution [CSMA/CR] concept, are becoming increasingly important for real-time and safety applications. They offer reliable communication, low implementation complexity, low-cost components, and priority-based media access. Recently, the releases of CAN-FD [Flexible Data-rate] and CAN-XL [eXtra Long] have enabled these types of systems to offer high data rates of up to 10 Mbit/s and the ability to transmit larger messages, up to 64 bytes. However, as the volume of data exchanged between sensors, actuators, and different service functions over an in-vehicle network [IVN] grows, the need for communication links with higher bit rates becomes increasingly crucial to satisfy low latency, safety, and end-to-end reliable communication requirements. As a result, future CAN services will demand ultra-high bit rates for connections between Electronic Control Units [ECU].

Today, the deployed modulation format limits the bandwidth efficiencies and data rates of CAN-systems. On a typical CAN-bus, data transmission is limited to one bit per sampling time unit by utilizing two conductors, that is for example two wires, with distinct voltage levels to encode either a dominant bit 0 [zero] or a recessive bit 1 [one]. Additionally, the sampling time in the arbitration phase is selected to be large enough to ensure arbitration between nodes connected to the bus of a specific length, which further restricts the data rate of the bus. Employing sophisticated modulation techniques, like Quadrature Phase Shift Keying [QPSK] and m-ary Quadrature Amplitude Modulation (m-QAM), can substantially enhance bandwidth efficiency and data rates.

However, such modulation techniques require extensive modifications to the CAN-bus to achieve an increase in bandwidth efficiency.

On this basis, the present invention is based on the task of at least partially overcoming the disadvantages known from the prior art. The features according to the invention result from the independent claims, for which advantageous embodiments are shown in the dependent claims. The features of the claims can be combined in any technically meaningful way, whereby the explanations from the following description and features from the figures, which comprise supplementary embodiments of the invention, can also be used for this purpose.

The invention relates to a CAN-bus-system for transmitting data between CAN-nodes, comprising at least the following components:

- a CAN-bus with a plurality of communication-conductors;
- at least two CAN-nodes which are in a data-transmitting connection by means of the communication-conductors; and
- at least one resistor between each two of the communication-conductors.

The CAN-bus-system is characterized in particular by the fact that the CAN-bus comprises at least three communication-conductors.

Unless explicitly stated otherwise, ordinal numbers used in the preceding and following description are only used for the purpose of clear differentiation and do not reflect any order or ranking of the designated components. An ordinal number greater than one does not necessarily mean that another such component must be present.

The proposed CAN-bus-system comprises a CAN-bus with a plurality of communication-conductors, at least two CAN-nodes and at least one resistor, each between two communication-conductors. The CAN-bus is configured to transmit data between the CAN-nodes of the CAN-bus-system. The CAN-nodes are formed by electronic control units [ECU]. Each of the CAN-nodes, that is each ECU, is electrically connected to each of the communication-conductors. The communication-conductors are designed to transmit data between the ECU in the form of electrical signals. For this purpose, at least two different voltages are applicable between the communication-conductors by means of the ECU. Each communication-conductor is preferably a wire. Preferably, the wires of the CAN-bus forming the conductors are drilled up.

One resistor (per end of the CAN-bus) is arranged between every two communication-conductors. Preferably, the resistors are of equal size, that is provide the same electrical resistance. Preferably, an equal resistor is arranged at each of the two ends of the CAN-bus between two of the communication-conductors. This means that the voltages applied between the communication-conductors by means of the CAN-nodes are applied across the resistors.

A typical topology of a CAN-bus, according to the prior art, consists of two communication-conductors, for example, referred to as CAN-high and CAN-low, terminated by two resistors. The number of CAN-nodes connected to the CAN-bus usually varies depending on the length of the CAN-bus and the total number of message types transmitted by the connected CAN-nodes. Each CAN-node is equipped with the necessary number of pins to connect to the bus. Therefore, each CAN-node is configured to apply a specific voltage between the communication-conductors of the CAN-bus, or over the resistors respectively, while simultaneously detecting the voltage between the conductors, or the voltage on the resistors respectively, as described above. The two conductors are utilized to represent distinct voltage levels, that is voltage potentials, that are used to differentiate between various symbols that are to be modulated and transmitted via the CAN-bus.

A typical CAN-bus-system, according to prior art, utilizes two distinct voltage ranges to differentiate between two symbols, where each symbol represents either a recessive 1 [one] or dominant 0 [zero] state, for example in an arbitration phase. When the voltage between said two communication-conductors is greater than a defined reference value, for example zero, the dominant state is achieved and symbol S1 is transmitted via the bus to represent a bit value of 0 [zero]. In other words, a voltage is applied across the resistors between the conductors that is greater than the reference value. Conversely, when the respective voltage is equal to or smaller than the reference value, for example 0 [zero], the recessive state is achieved and symbol S0 is transmitted over the CAN-bus to represent a bit value of 1 [one]. The recessive state is normally achieved when the voltage is 0 [zero]. Symbols S0 and S1 are utilized in both arbitration and data communication phases.

Compared to such a CAN-bus-system known from the prior art, the CAN-bus-system proposed here has three communication-conductors. At least two, preferably at least three, resistors are arranged between the communication-conductors at each end of the CAN-bus. Particularly preferably, the number of resistors corresponds to the number of communication-conductors, with one resistor being arranged between every two communication-conductors (at each end of the CAN-bus).

Thus, the CAN-bus-system provided in this invention comprises a multi-conductor CAN-bus topology, which employs the at least three communication-conductors, for example referred to as high line [CANH], middle line [CANM], and low line [CANL]. By modulating data via symbols using different voltages between at least three distinct points, each on a different one of the at least three communication-conductors, the CAN-bus is configured to effectively transmit information. Because there are at least three communication-conductors, every CAN-node is equipped with at least three pins to connect to the CAN-bus. With just two different voltages the proposed topology allows a modulation of four different symbols. Using three different voltages the proposed topology allows a modulation of seven different symbols. It is important to note that in such a case, there are three potential voltages across any given pair of points on the communication-conductors, wherein each point is located on a different communication-conductor. For example, each pair of points is located on two opposite sides of a resistor or at the points of connection of a CAN-node to the communication-conductor. For example, the three different voltages are a positive voltage, a negative voltage and a zero voltage.

In the case of a classic CAN-bus-system, known form the prior art, with two conductors, we do not typically observe negative voltage across the resistor in practice. However, it is important to note that this is a result of the initial design of the system. By deliberately invoking negative voltage across the resistor, it is possible to obtain three symbols in the system.

The proposed CAN-bus-system is configured to significantly enhance the bit rate of the data transmission via the CAN-bus while keeping the baud rate constant, as it allows for the modulation of multiple bits into a single symbol, enabling the transmission of multiple bits simultaneously, that is in one sampling time. Such a CAN-bus-system is configured for the use of additional CAN identifiers without extending the duration of the arbitration phase. This provides the possibility to generate a greater variety of message types.

It is further proposed in an advantageous embodiment of the CAN-bus-system that the CAN-bus has at least four communication-conductors, preferably exactly four communication-conductors.

According to this embodiment, it is now proposed that the CAN-bus has more than three, for example exactly four or more communication-conductors.

Comprising a CAN-bus with four communication-conductors, the CAN-bus-system is configured to modulate 19 [nineteen] different symbols with three voltages, for example.

It is further proposed in an advantageous embodiment of the CAN-bus-system that each CAN-node is configured to connect each of the communication-conductors to a first electrical supply potential and to a second electrical supply potential.

According to this embodiment, each of the CAN-nodes is configured to connect each of the communication-conductors to a first electrical supply potential and a second electrical supply potential. For example, the CAN-bus has supply conductors for this purpose. For example, the first electrical supply potential is provided by means of a first supply conductor and the second electrical supply potential by means of a second supply conductor. For example, the second supply conductor is a grounding or an earthing conductor and the first supply conductor provides a voltage relative to the grounding, for example a voltage of 5 V [five volts].

For example, each ECU, that is CAN-node, comprises a plurality of switches, preferably at least one switch per communication conductor, particularly preferably two switches per communication conductor, in order to connect each communication conductor to the first supply potential and the second supply potential, that is the first supply conductor and the second supply conductor, in a separable manner. For this purpose, one switch is arranged between each of the communication-conductors and each of the supply conductors.

It is further proposed in an advantageous embodiment of the CAN-bus-system that the CAN-bus-system has at least one, preferably two, supply conductors which are connectable to the communication-conductors as first electrical supply potential and/or second electrical supply potential by means of switches of the CAN-bus-nodes.

Furthermore, in an advantageous embodiment of the CAN-bus-system, it is proposed that one resistor per communication-conductor is arranged between two communication-conductors at each end of the CAN-bus.

It is further proposed in an advantageous embodiment of the CAN-bus-system that each of the CAN-nodes is configured to apply three different voltages to the communication-conductors via each of the resistors,

wherein preferably the different voltages are a positive voltage, a negative voltage and a zero voltage,

wherein particularly preferably the positive voltage and the negative voltage have the same modulus, that is absolute value.

It is further proposed in an advantageous embodiment of the CAN-bus-system that each of the CAN-nodes comprises a plurality of switches which are configured and arranged so that each of the communication-conductors is connectable to a first electrical supply potential and a second electrical supply potential.

It is further proposed in an advantageous embodiment of the CAN-bus-system that each CAN-node comprises a switch control unit designed to control the switches in such a way as to send, in an arbitration phase, a prioritization message comprising a sequence of symbols, each of the symbols in the sequence of symbols representing one of at least three prioritization levels.

It is further proposed in an advantageous embodiment of the CAN-bus-system that each of the CAN-nodes comprises a processor and a switch control unit. The switch control unit is configured to open and close the switches of the CAN-node. For example, the switch control unit is configured to buffer data, for example to hold messages until the CAN-node asserts itself in the arbitration phase and is allowed to send the buffered messages due to its priority, or to hold received messages or message parts and forward them to the processor. For example, the switch control unit is configured to translate the symbols of received messages into a binary code for the processor.

Preferably, the CAN-node, or the switch control unit respectively, is configured to execute a method according to the following description.

The switch control unit is integrated into the processor, for example, or configured as a separate component.

It is further proposed in an advantageous embodiment of the CAN-bus-system that each of the CAN-nodes is configured to modulate a bit-group to a symbol-combination comprising a sequence of at least two symbols by means of a switch control unit.

According to a further aspect, an operating method for operating a CAN-bus-system is proposed, comprising the following steps:

a. by outputting at least one prioritization message by means of at least one of the CAN-nodes, performing an arbitration phase;

b. by outputting a communication message with at least three symbols by means of the CAN-node which was dominant in the arbitration phase, transmitting information to at least one further CAN-node.

An operating method for operating a CAN-bus-system is proposed here. The operating method comprises at least steps a. and b. and is configured to operate a CAN-bus-system as described above. Preferably, the CAN-bus-system is configured to execute the operating method further explained below.

In step a. an arbitration phase is carried out. In the arbitration phase, it is determined which ECU may send a communication message to one or more other ECUs in the subsequent communication phase. For this purpose, at least the ECU that have a message to transmit send a prioritization message.

The prioritization message comprises a sequence of symbols. The symbols are subject to a hierarchy that defines the prioritization. Each symbol that is provided to be included in a prioritization message represents a prioritization level, for example. The individual symbols of the prioritization messages are sent by the ECU according to a sampling time. Each ECU is designed, and the symbols and their prioritization are selected in such a way, that each ECU is configured to detect whether another ECU is sending a symbol with a higher prioritization than itself at the current digit of the prioritization message, that is at the current sampling time of the prioritization message. In such a case, the ECU withdraws from the prioritization phase and stops sending the prioritization message. This continues until only one ECU with the highest priority remains in the arbitration phase.

Preferably, the CAN-bus-system is a deterministic system. Thus, each CAN-node, each type of communication message of each CAN-node and/or each communication message is preferably assigned a unique prioritization message.

The CAN-node that has prevailed in the prioritization phase in step a., that is has the highest priority for its communication message, then sends the communication message in step b..

The communication message, which is output in step b., is based on at least three different symbols. Each symbol is represented by a voltage between two of the communication-conductors of the CAN-bus. For example, three different voltages are provided to be assigned between each possible pairing of communication-conductors. Preferably, a first of the voltages is a positive voltage, a second of the voltages is a zero voltage and a third of the voltages is a negative voltage, the absolute value of which corresponds to the first voltage.

Other CAN-nodes then receive the communication message and preferably translate a sequence of said symbols, that is voltages between the different communication-conductors respectively, into a binary signal consisting of a corresponding number of bits. A symbol combination with several symbols is therefore preferably assigned to a binary number, that is a character string of bits. With three different voltages and three communication-conductors, an information content of 2.807 bits can theoretically be transmitted with each transmitted symbol. This means that such a CAN-bus-system is configured to transmit 0.9357 bits per conductor. A corresponding CAN-bus-system with four communication-conductors is configured to transmit 4,2479 bits per symbol, which corresponds to 1.06175 bits per conductor. A CAN-bus-system with five communication-conductors is configured to transmit 5.6724 bits per symbol, that is 1.1345 bits per communication-conductor. A CAN-bus-system with six communication-conductors is configured to transmit 7.1396 bits per symbol, that is 1.1899 bits per communication conductor. By comparison, in a previously known CAN-bus-system with two communication-conductors and two voltage levels used, only 1 bit per symbol and therefore only 0.5 bits per communication-conductor can be transmitted. Even with three voltage levels on two communication-conductors, only 1.585 bits per symbol can be transmitted and therefore 0.7925 bits per communication-conductor.

Preferably, the method for operating the CAN-bus comprises further scheduling phases (besides the arbitration phase and the communication phase) which are known to the person skilled in the art. For example, a so-called CAN frame comprises a start phase, in which it is signalled that a new CAN-frame is beginning, the arbitration phase described above, a control phase, the communication phase described above, a CRC phase, a delimiter phase and/or an end-of-frame phase.

It is further proposed in an advantageous embodiment of the operating method that in the arbitration phase in step a. the prioritization message is modulated on the basis of at least three different prioritization levels, wherein each of the prioritization levels is preferably represented by means of a symbol.

Such a prioritization allows for more efficient and accurate arbitration among the CAN-nodes. For example, three different symbols are used in the arbitration phase of a CAN-bus with three communication-conductors. These three symbols are, solely as an example, referred to as S0, S1, and S2. The priority order of these three symbols is for example defined as follows. The nodes transmitting S2 have the highest priority, followed by nodes transmitting S1, and finally nodes transmitting S0 have the lowest priority. When a CAN-node transmits S2, it sets, in the given example, a non-zero voltage across third resistors (for example between the first communication-conductor and the second communication-conductor), which is detectable by other CAN-nodes that are not transmitting S2 and not transmitting any symbol with a non-zero voltage level across the third resistors. Likewise, when a CAN-node transmits S1, it sets, in the given example, a non-zero voltage across a second resistors (for example between the second communication-conductor and the third communication-conductor), which is detectable by CAN-nodes that are not transmitting S1 and not transmitting any symbol with a non-zero voltage across the second resistors. CAN-nodes that transmit S0 have the lowest priority and must be able to identify other nodes transmitting S1 or S2 and vacate the bus as necessary. Thus, to send S0 the respective CAN-node does apply a zero voltage across the second and third resistors, across which a non-zero voltage is applied for S1 and S2, in the described example. For example, the respective CAN-node applies three zero-voltages across all three resistors to send the symbol S0.

By executing an arbitration-phase which is based on a set of symbols that has three or more comparable symbols, the process can be expedited compared to using a set with only two symbols, assuming that the same number of CAN-nodes are connected to a CAN-bus and the same number of message types are transmitted by each CAN-node. This is because having more symbols allows for a more efficient arbitration process, which ultimately results in faster completion times.

It is further proposed in an advantageous embodiment of the method of operation that in step **b.** the communication message is modulated on the basis of a symbol-combination comprising a sequence of at least two symbols, wherein each symbol-combination is assigned a bit-group.

In this embodiment of the method of operation it is proposed to modulate bits, that is the information contained within the bits, onto one of a plurality of symbol-combinations in the communication message. Modulating data onto a single symbol may not necessarily result in optimal bits-per-symbol efficiency, as the number of different symbols useable to transmit information in the communication-message is limited.

Every possible bit sequence resulting from the number of digits in the bit-group must be representable via the symbols. The number of possible bit sequences is, in this example, calculated by exponentiating two with the number of digits in the bit-group. Thus, if the bit-group is only one bit long, there are two possible bit sequences (0 and 1). With a length of two bits, there are four possible bit sequences (00, 01, 10, 11), with a length of three bits, there are eight possible bit sequences and so on. Accordingly, the number of usable (advantageous) symbols is limited to a power of two. For seven possible symbols, in the case that three communication-conductors with three possible voltages are used, only a bit sequence of two bits, that is four possible symbols, can be used advantageously, meaning that no two symbols have the same meaning. A bit-group with a length of three bits would require eight symbols and would therefore no longer be representable.

Therefore, modulating data onto multiple symbols results (depended on the number of possible different symbols) to bandwidth efficiencies that is a close approach to the theoretical maximum of symbols (for example only defined by the number of used voltages and the number of conductors used).

For example, if the CAN-bus-system has a set of seven symbols available to modulate the communication messages, allowing for 49 unique symbol pairs, that is symbol-combinations, which comprise a sequence of two consecutive symbols. Thus, up to 5 integer bits are modulateable onto 32 of the 49 symbol pairs. This results in a significant increase in efficiency compared to modulating data onto individual symbols. Hence, a bandwidth efficiency of 2.5 bits per symbol and an efficiency of 1.25 bits per communication-conductor is provided.

In this context, a symbol-combination is to be understood in such a way that it comprises at least two symbols to which no meaning is assigned individually for the communication phase. For the communication phase, a bit or a bit-group is therefore not assigned to a single symbol. A communication message is therefore not based on bits or bit-groups assigned to a single symbol and solely strung together according to the meaning of the individual symbols. At the same time, however, it is possible for several symbol-combinations to be strung together in a communication message.

It is further proposed in an advantageous embodiment of the method of operation that each symbol of the prioritization message and/or the communication message is modulated by applying one of three voltages across each of the resistors by means of the corresponding CAN-node.

As explained in relation to the CAN-bus-system, the CAN-bus-system preferably comprises one resistor per communication-conductor at each end of the CAN-bus. Preferably, one resistor is arranged between each possible combination of communication-conductors at each end of the CAN-bus. It is now proposed here to apply one of three voltages across the resistors by means of the CAN-nodes.

For example, a first supply potential is provided by means of a first supply conductor and a second supply potential by means of a second supply conductor. For example, the first supply potential has a voltage with respect to the second supply potential, which is a grounding, for example.

For example, the corresponding communication-conductors are connected to one of the supply conductors using switches on the CAN-node. For example, a switch is arranged in each CAN-node between each supply conductor, that is each supply potential, and each communication-conductor. For example, each CAN-node comprises two switches for each communication-conductor. For example, a first switch is used to connect a first communication-conductor to the first supply conductor by closing the first switch, a second switch is used to connect the first communication-conductor to the second supply conductor, a third switch is used to connect the second communication-conductor to the first supply conductor, a fourth switch is used to connect the second communication-conductor to the second supply conductor, a fifth switch is used to connect the third communication-conductor to the first supply conductor and a sixth switch is used to connect the third communication-conductor to the second supply conductor.

For example, the first switch is closed, the second switch is opened, the third switch is opened, and the fourth switch is closed to apply a first voltage between the first communication-conductor and the second communication-conductor, that is a voltage across first resistors separating the first communication-conductor and the second communication-conductor. By opening the first switch, closing the second switch, closing the third switch and closing the fourth switch, the voltage between the first communication-conductor and the second communication-conductor is reversible with respect to the first voltage. This means that a second voltage is provided between the communication-conductors, that is across the corresponding resistors. If, for example, all four switches on the first communication-conductor and the second communication-conductor are opened in the respective ECU, a zero voltage is provided. This means that a third voltage is provided across the resistors, that is between the communication-conductors. Analogously, for example, the voltages between the other communication-conductor pairs, that is across the other resistors are controlled.

The use of three different voltages therefore makes it possible to modulate the communication message on the basis of more different symbols and thus increase the bandwidth efficiency.

It is further proposed in an advantageous embodiment of the operating method that a first voltage out of the three voltages is a positive voltage, a second voltage is a zero voltage, and a third voltage is a negative voltage.

As already explained in an example, a first voltage is, according to one embodiment, a positive voltage, a second voltage is a negative voltage, and a third voltage is a zero voltage. Preferably, the positive voltage and the negative voltage have essentially the same absolute value and are merely reversed in their orientation, that is mathematical sign.

According to a further aspect, a motor vehicle with a CAN-bus-system according to the preceding description is proposed, comprising at least the following further components:

- a traction unit for providing a drive torque;
- at least one traction wheel in torque-transmitting connection with the traction unit; and
- at least two electronic control units [ECU], which are in data-transmitting connection by means of the CAN-bus.

A motor vehicle with a CAN-bus-system as described above is proposed here. CAN-bus-systems are used in motor vehicles to connect several CAN-nodes, that is ECU, with each other in a data-transmitting manner. The CAN-bus-system thus forms a, preferably non-hierarchical, network of several control units, each of which is connected to each other in a communicating manner. For example, the ECU are control units for the headlights, the traction unit, air conditioning units, brakes, sensors, window lifters, infotainment systems or other vehicle components.

The motor vehicle also has a traction unit and at least one traction wheel. For example, the motor vehicle comprises four wheels, two or four of which are designed as traction wheels. The traction wheels are connected to the traction unit in a torque-transmitting manner, preferably by means of a gearbox. The traction unit is designed to provide a drive torque for the motor vehicle. According to the embodiment, the traction unit is an internal combustion engine.

The invention described above is explained in detail below against the relevant technical background with reference to the accompanying drawings, which show preferred embodiments. The invention is in no way limited by the purely schematic drawings, it being noted that the drawings are not dimensionally accurate and are not suitable for defining proportions. It is shown in

Fig. 1: a prior-art bus system;
Fig. 2: a CAN-bus-system with three communication-conductors in a schematic diagram;
Fig. 3: a CAN-bus-system with four communication-conductors in a schematic diagram;
Fig. 4: a CAN-bus-system with K communication-conductors;
Fig. 5: a modulation table for symbols using voltages in the communication-conductors of a CAN-bus-system according to Fig. 2;
Fig. 6: a modulation table for symbols using voltages in the communication-conductors of a CAN-bus-system according to Fig. 3;
Fig. 7: a modulation table for a prioritization message in a CAN-bus-system according to Fig. 2;
Fig. 8: a modulation table for a prioritization message in a CAN-bus-system according to Fig. 3;
Fig. 9: an assignment of a bit-group to a symbol-combination for a CAN-bus-system according to Fig. 2 for a communication phase;
Fig. 10: a modulation table according to Fig. 6 with a gap for an assignment of a bit-group for a communication phase; and
Fig. 11: a symbolic representation of a motor vehicle with a CAN-bus as shown in Fig. 2.

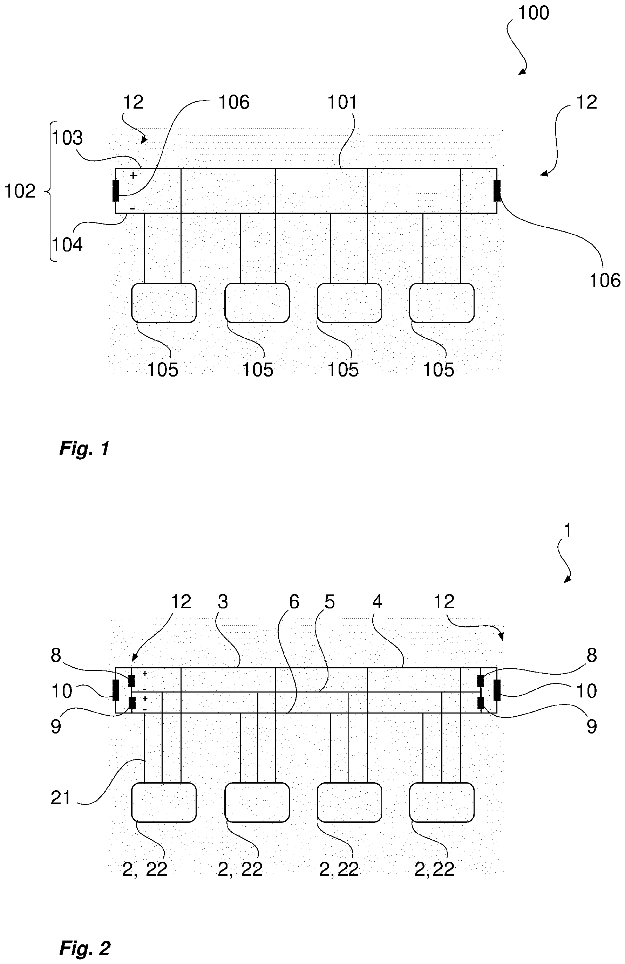

Fig. 1 shows a previously known bus-system **100** of a Controlled Area Network [CAN] according to the prior art. The bus-system **100** comprises two CAN-conductors **102,** also referred to as CAN-High **103** [CAN-H] and CAN-Low **104** [CAN-L]. The two CAN-conductors **102** are connected to each other, or separated from each other respectively, at both bus ends of the bus **101** by means of CAN-resistors **106.** In the shown embodiment, four electronic control units [ECU **105**] are connected to the bus **101** as open circuits. The ECU **105** are correspondingly connected to each other via the bus **101.** The ECU **105** thus form CAN-bus nodes of the bus-system **100.**

Each ECU **105** comprises a switch by means of which the CAN-H can be connected to a voltage potential, for example a 5 V [five volts] voltage in relation to a grounding. For example, CAN-L forms the grounding or is connected to an earth grounding. By opening and closing the switch, it is possible to switch between the 5 V [five volts] voltage and a zero voltage between CAN-H and CAN-L by means of each ECU **105.**

This means that one symbol can be sent for each clock cycle, that is sampling time, in both an arbitration phase and a communication phase. For example, applying the 5 V voltage via an ECU **105** corresponds to a logical 0 [zero] and a zero voltage corresponds to a logical 1 [one], in binary code. In the arbitration phase, in which it is determined which ECU **105** may send a message in the subsequent communication phase, the logical zero is used as the dominant symbol and the logical 1 as the recessive symbol, for example, so that the ECU **105** that sends an arbitration message with the lowest number prevails.

Fig. 2 shows a CAN-bus-system **1** with three communication-conductors **4,5,6** in a schematic representation. The CAN-bus-system **1** comprises a CAN-bus **3** with three communication-conductors **4, 5, 6.** Three resistors **8,9,10** are arranged between each of the communication-conductors **4,5,6** at both ends **12** of the CAN-bus **3.** In each case, a first resistor **8** is arranged between the first communication-conductor **4** and the second communication-conductor **5,** a second resistor **9** is arranged between the second communication-conductor **5** and the third communication-conductor **6** and a third resistor **10** is arranged between the first communication-conductor **4** and the third communication-conductor **6.** Preferably, the resistors **8,9,10** are each of the same size, that is provide the same resistance.

Solely as an example, the CAN-bus-system **1** has only four ECU **22** connected as CAN-nodes **2** to the CAN-bus **3,** each connected with all three communication-conductors **4,5,6.** For this purpose, the CAN-bus-system **1** comprises three connecting pins **21** (one of which is marked here pars pro toto with a reference sign) for each CAN-node **2,** that is ECU **22,** by means of which these are connected to the communication-conductors **4,5,6.**

The use of three communication-conductors **4,5,6,** compared to the two CAN-conductors **102** (as shown in Fig.

7

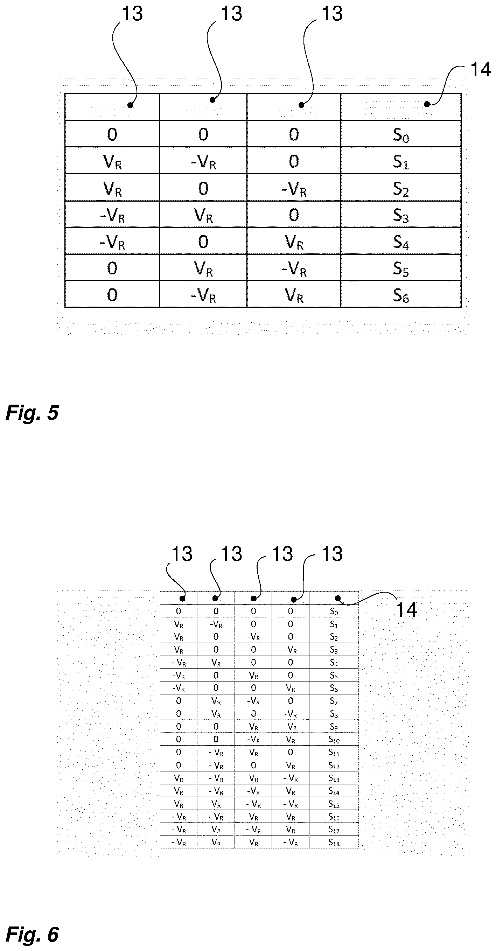

1), makes it possible to use several different symbols **14** (as shown for example in Fig. 5) for modulating a message, for example a communication message and/or prioritization message. By means of the ECU **22**, for example by means of a plurality of switches, preferably by means of two switches per communication-conductor **4,5,6**, the communication-conductors **4** are each connectable to a first supply conductor and a second supply conductor (not shown here). A first supply potential is provided by means of the first supply conductor and a second supply potential by means of the second supply conductor. For example, there is a voltage **13** (see Fig. 5) of 5 V [five volts] between the first supply potential and the 2second supply potential. For example, the second supply conductor is a grounding.

Thus, each of the ECU **22** are configured to generate three different voltages **13** across each of the resistors **8,9,10** that is between two communication-conductors **4,5,6**. Accordingly, seven different symbols **14** can be modulated on the three communication-conductors **4,5,6** by means of the three voltages **13** (according to Fig. 5).

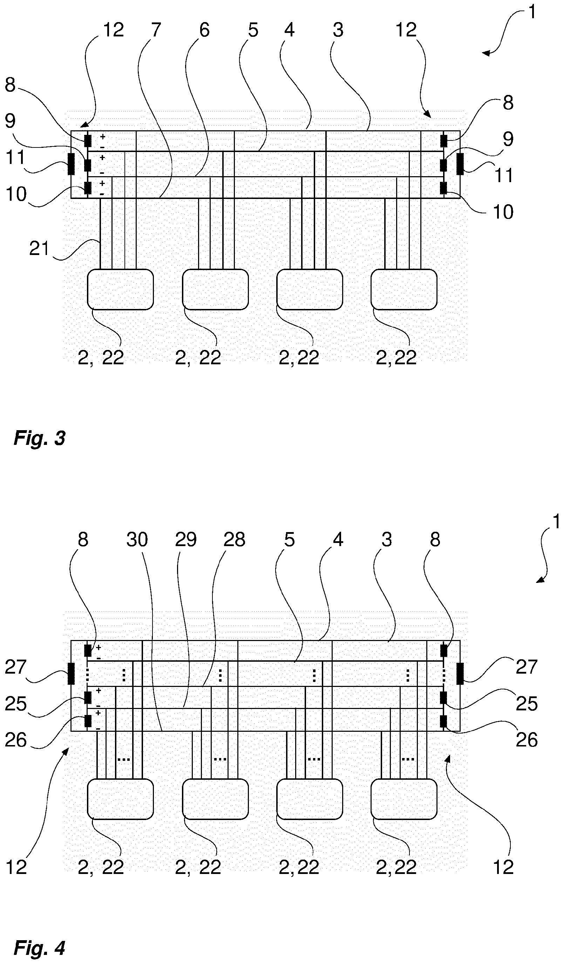

Fig. 3 shows a CAN-bus-system **1** with four communication-conductors **4,5,6,7** in a schematic representation. Compared to the CAN-bus-system **1** shown in Fig. 2, the CAN-bus-system **1** shown here now has four communication-conductors **4,5,6,7** and correspondingly four resistors **8,9,10,11** at each end **12** of the CAN-bus **3**.

Accordingly, each ECU **22** is connected to the communication-conductors **4,5,6,7** by means of four connecting pins **21**. A first resistor **8** is arranged at each end **12** of the CAN-bus **3** between the first communication-conductor **4** and the second communication-conductor **5,** a second resistor **9** between the second communication-conductor **5** and the third communication-conductor **6**, a third resistor **10** between the third communication-conductor **6** and the fourth communication-conductor **7** and a fourth resistor **11** between the fourth communication-conductor **7** and the first communication-conductor **4**. Thus, three voltages **13** (see Fig. 6) can be applied between four pairs of communication-conductors, that is via four resistors at each end **12** of the CAN-bus **3** by means of the ECU **22**. Thus, for example, 19 [nineteen] symbols **14** can be modulated (compare Fig. 6).

Fig. 4 shows CAN-bus-system **1** with K communication-conductors **4,5,6,7**. In contrast to the CAN-bus-systems **1** shown in Fig. 2 and Fig. 3, a CAN-bus-system **1** with additional communication-conductors **28,29,30** and resistors **25,26,27** is shown here. The number of communication-conductors **4,5,6,7,28,29,30** can be increased as required. The person skilled in the art will decide the number of communication-conductors, for example, by weighing up weight and installation space on the one hand and transmission efficiency on the other. In the shown example, the CAN-bus **3** comprises a number of K communication-conductors **4,5,6,7,28,29,30,** whereby only the first two communication-conductors **4,5** and the (K-2)-th communication-conductor **30**, the (K-1)-th communication-conductor **29** and the K-th communication-conductor **28** are shown, and optional further communication-conductors are indicated by means of dots. The first resistor **8**, the (K-2)-th resistor **27**, the (K-1)-th resistor **26** and the K-th resistor **25** are also shown. Further optional resistors are also indicated by dots.

The maximum number of symbols **14** that a K-conductor CAN-bus **3** is configured to generate, using the two supply potentials to generate the three different voltages, as described above, is given by the formula

$$ F = \sum_{K_r=0}^{\lfloor K/2 \rfloor} \frac{K!}{K_r! \, K_{-r}! \, K_0!} $$

where $K_0$ represents the numbers of (third) zero voltages **13**, $K_r$ the number of positive (first) voltages **13** and $K_{-r}$ the number of negative (second) voltages **13,** respectively, that constitute a symbol, and **F** is the number of symbols. The operator L J represents the mathematical operation known as the floor function. When applied to a real number, the floor function outputs the largest integer that is less than or equal to the input.

The formula is based on the physical boundaries of the shown CAN-bus-system **1** described, for example by Kirchhoff's law. Which can be expressed in the following mathematical terms:

$$ K_r = K_{-r} ; $$

$$ K_r + K_{-r} + K_0 = K ; $$

$$ K_r \geq 0 ; $$

$$ K_0 \geq 0. $$

Fig. 5 shows a modulation table for symbols **14** using voltages **13** in the communication-conductors **4,5,6** of a CAN-bus-system **1** according to Fig. 2. The voltage **13** across the first resistors **8,** that is between the first communication-

conductor **4** and the second communication-conductor **5,** is shown in a first column, a voltage **13** across the second resistors **9** between the second communication conductor **5** and the third communication conductor **6** is shown in a second column, and a voltage **13** across the third resistors **10** between the first communication conductor **4** and the third communication conductor **6** is shown in the third column. Each row represents the voltage combination across the respective resistors **8,9,10** for each of the possible symbols **14.**

The three different voltages **13,** which are applicable by each CAN-node **2** across each of the resistors **8,9,10,** are shown here as $V_R$, $-V_R$ and 0. $V_R$ is referred to here as a first, positive voltage **13,** $-V_R$ as a second, negative voltage **13** and 0 as a third zero voltage **13.** The symbols **14** are numbered $S_0$ to $S_6$.

It should be noted that in the embodiment shown here, the three different voltages **13** are generated by means of two supply potentials. This means that certain voltage combinations are not possible via the communication-conductors **4,5,6.** For example, it is not possible to apply a zero voltage across the first and second resistors **8,9** and at the same time the first or second voltage **13** via the third resistors **10.** In this case, a zero voltage must also be applied via the third resistors **10.** Accordingly, the same supply potential is applied to the first communication-conductor **4** and the third communication-conductor **6** as to the second communication-conductor **5** in order to generate the zero voltage across the first and second resistors **8,9.**

As already explained with reference to Fig. 4, this physical relationship, which results from Kirchhoff's law, can be expressed in a formula, which, when applied to a CAN-bus **3** with three communication-conductors **4,5,6,** leads to seven symbols **14,** as explained below and as can be seen from the modulation table shown:

$$F = \sum_{K_r=0}^{\lfloor K/2 \rfloor} \frac{K!}{K_r! \, K_{-r}! \, K_0!} = \sum_{K_r=0}^{\lfloor 3/2 \rfloor} \frac{3!}{K_r! \, K_{-r}! \, K_0!} = \sum_{K_r=0}^{1} \frac{3!}{K_r! \, K_{-r}! \, K_0!}$$

$$= \frac{3!}{0! \, 0! \, 3!} + \frac{3!}{1! \, 1! \, 1!} = 7$$

Fig. 6 shows the modulation table for symbols **14** using voltages **13** in the communication-conductors **4,5,6,7** of a CAN-bus-system **1** according to Fig. 3. The three different voltages **13** ($V_R$, $-V_R$ and 0) across the four resistors **8,9,10,11** are shown here accordingly. The voltage **13** across the first resistors **8,** that is between the first communication-conductor **4** and the second communication-conductor **5,** is shown in a first column, a voltage **13** across the second resistors **9** between the second communication-conductor **5** and the third communication-conductor **6** is shown in a second column, a voltage **13** across the third resistors **10** between the third communication-conductor **6** and the fourth communication-conductor **7** is shown in the third column and a voltage **13** across the fourth resistors **11** between the fourth communication-conductor **7** and the first communication-conductor **4** is shown in a fourth column.

The formula explained with reference to Fig. 4 for calculating the number of possible symbols **14** results accordingly in 19 [nineteen] symbols **14** for a CAN-bus **3** with four communication-conductors **4,5,6,7,** according to the following calculation

$$F = \sum_{K_r=0}^{\lfloor K/2 \rfloor} \frac{K!}{K_r! \, K_{-r}! \, K_0!} = \sum_{K_r=0}^{\lfloor 4/2 \rfloor} \frac{4!}{K_r! \, K_{-r}! \, K_0!} = \sum_{K_r=0}^{4} \frac{4!}{K_r! \, K_{-r}! \, K_0!}$$

$$= \frac{4!}{0! \, 0! \, 4!} + \frac{4!}{1! \, 1! \, 2!} + \frac{4!}{2! \, 2! \, 0!} = 19.$$

Initially, with all voltages across the resistors set to zero, that is $K_r = 0$, we obtain symbol $S_0$. By setting $K_r$ to 1 and considering permutations between two zero voltages [0], a positive voltage **13** [$V_R$] and a negative voltage **13** [$-V_R$], Symbols **14** $S_1$ to $S_{12}$ are derivable. Finally, by setting $K_r$ to 2 and considering permutations between two positive voltages **13** [$V_R$] and two negative voltages **13** [$-V_R$], symbols $S_{13}$ to $S_{18}$ are derivable.

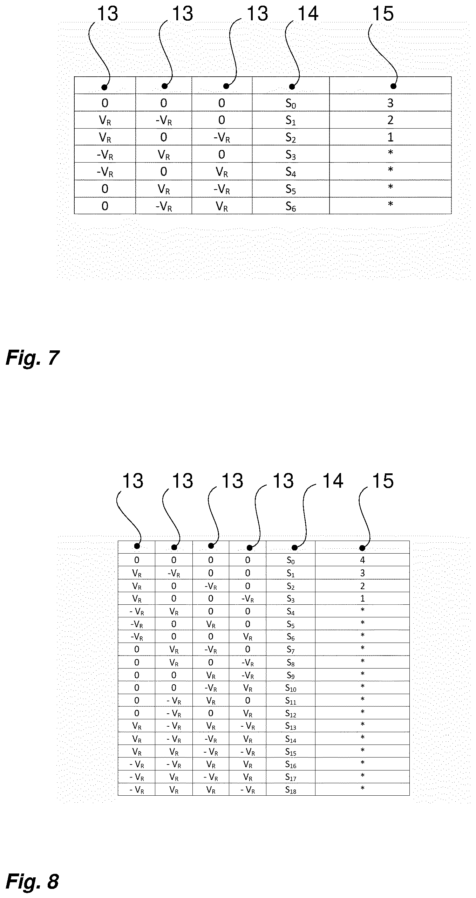

Fig. 7 shows a modulation table for a prioritization message in a CAN-bus-system **1** according to Fig. 2.

In the arbitration phase of a CAN protocol, prioritization messages are sent by all CAN-nodes **2,** that is ECU **22** that want to send a message to one or more other ECU **22.** The prioritization message comprises a sequence of symbols **14,** whereby individual symbols **14** are sent in sequence by the individual ECU **22** via the CAN-bus **3** at a fixed rate. Each CAN-bus **3** checks whether the symbol **14** it is currently transmitting is recessive compared to a symbol **14** of another transmitting ECU **22.** If this is the case, the ECU **22** exits the arbitration phase, that is stops sending the prioritization message. This means that only the ECU **22** with the highest priority remains at the end of the arbitration phase.

In a previously known bus-system **100,** as shown in Fig. 1, the prioritization messages consist of a sequence of bits, that is a binary code. For example, a 0 [zero] is a dominant symbol and a 1 [one] is a recessive symbol, so that the ECU with the lowest number in the prioritization message is the dominant one.

In contrast, it is now proposed here that three different symbols **14** are used for a CAN-bus-system **1** with three communication-conductors **4, 5, 6**. The first four columns of the modulation table shown correspond to the modulation table in Fig. 5. The fifth column shows the prioritization levels **15**, which are assigned to the symbols **14** $S_0$, $S_1$ and $S_2$, in the embodiment example shown. This means that only one subset of the possible symbols **14** ($S_1$ to $S_6$) is used for the prioritization message. Alternatively or additionally, other subsets are used, that is the prioritization levels **15** are assigned to other symbols **14**. Possible further subsets include, for example, the symbols **14** $\{S_0, S_3$ and $S_4\}$, $\{S_0, S_2$ and $Ss\}$, $\{S_0, S_4$ and $Ss\}$, $\{S_0, S_1$ and $Se\}$ or $\{S_0, S_3$ and $Ss\}$.

Symbol **14** $S_0$ has the lowest prioritization level, represented here by a 3, symbol **14** $S_1$ has a medium prioritization level **15**, represented here by a 2, and symbol **14** $S_2$ has the highest priority, represented here by a 1. Since $S_0$ is the symbol **14** with the lowest prioritization level **15**, a CAN-node **2**, which transmits $S_0$ in the prioritization message, must be configured to detect the symbols **14** $S_1$ and $S_2$ at the same time as the recessive symbol **14** $S_0$ is transmitted. Furthermore, a CAN-node **2** that transmits $S_1$ must be configured to detect when another CAN-node **2** transmits $S_2$ at the same time. This is implemented, for example, by all nodes of lower priority applying a zero voltage across at least one resistor **8,9,10**, across which the corresponding node of higher priority applies a positive voltage **13** or negative voltage **13**.

A zero voltage is applied across all resistors for the symbol **14** $S_0$. Preferably, all switches of the corresponding ECU **22** are open, by means of which the communication-conductors **4,5,6** can be connected to the supply potentials. Alternatively, for example only the switches that connect the communication-conductors **4,5,6** to the communication potentials are closed. To transmit the symbol **14** $S_1$, a positive voltage **13** ($V_R$) is applied across the first resistor **8**, a negative voltage **13** ($-V_R$) across the second resistor **9** and a zero voltage across the third resistor **10** by means of the corresponding ECU, that is the corresponding CAN-node.

To transmit the symbol **14** $S_2$, a negative voltage **13** ($-V_R$) is applied across the first resistor **8**, a zero voltage (0) across the second resistor **9** and a negative voltage **13** ($-V_R$) across the third resistor **10**.

Fig. 8 shows a modulation table for a prioritization message in a CAN-bus-system **1** according to Fig. 3. The modulation table is an analogous transfer of the modulation table from Fig. 7 to a CAN-bus-system **1** with four communication-conductors **4,5,6,7**. Accordingly, reference is made to the description of Fig. 7, so that only the differences are explained here. The fifth column now shows four prioritization levels **15**, exemplified by the symbols **14** $S_0$, $S_1$, $S_2$ and $S_3$.

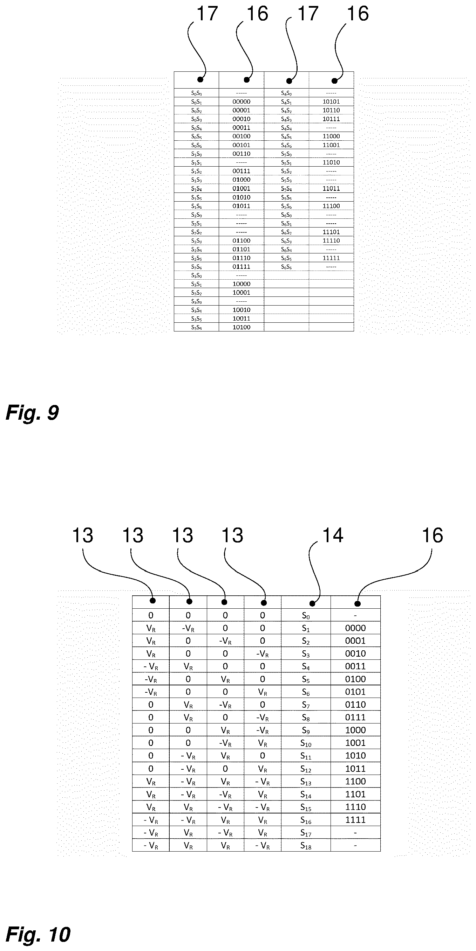

Fig. 9 shows an assignment of a bit-group to a symbol-combination **17** for a CAN-bus-system **1** according to Fig. 2 for a communication phase. Each symbol-combination **17** consists of two symbols **14**, which are modulated, for example, by means of the voltages **13** according to the modulation table in Fig. 5.

If a bit or bit-group **16** is assigned to each individual symbol **14**, the bit-group **16** comprises a maximum sequence of two bits for the CAN-bus-system **1** with three communication-conductors **4,5,6** (in the given example). Of the seven theoretically possible symbols **14**, a maximum of four is therefore useable to represent the four possible sequences of bits (00, 01, 10, 11).

In contrast, if the bit-group **16** is represented by means of a symbol-combination **17** of two symbols **14** and comprises a sequence of five bits (as shown), 32 of the theoretically possible 49 symbol-combinations **17** can be used without symbols being assigned twice.

This results in a significant increase in efficiency compared to modulating data onto individual symbols. Hence, a bandwidth efficiency of 2.5 bits per symbol and an efficiency of 1.25 bits per conductor is achieved. The presented allocation of bit-groups **16** with five bits to symbol-combination **17**, is taking into account the maximum cumulative distance achievable between the symbol-combination **17** within the two-dimensional voltage domain. Thus, the separation between the modulated symbol-combination **17** is maximized and the likelihood of interference between them due to thermal noise is minimized.

Fig. 10 shows a modulation table according to Fig. 6 with a column for an assignment of a bit-group **16** for a communication phase. For a CAN-bus-system **1** with four or more communication-conductors **4,5,6,7**, it is also possible to assign bit-groups **16** to symbol-combinations **17**. As can be seen from the table shown, 16 of 19 symbols **14** are usable when bit-groups are assigned to individual symbols **14**. Accordingly, a bit-group **16** with a sequence of four bits is used and assigned to one symbol **14** in each case.

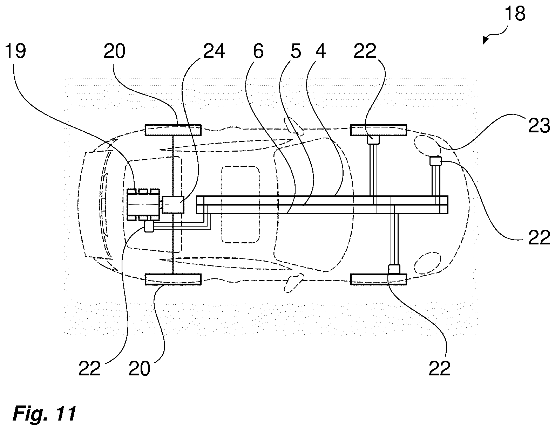

In Fig. 11, a motor vehicle **18** with a CAN-bus-system **1** according to Fig. 2 is shown in a symbolic representation. With regard to the CAN-bus **3**, reference is therefore made to the above description of the other figures, whereby a CAN-bus-system **1** according to Fig. 3 or Fig. 4 can also be installed in the motor vehicle **18** without the need for further adaptations.

The motor vehicle **18** further comprises a traction unit **19** and at least one traction wheel **20**. As shown, the motor vehicle **18** comprises four wheels, two of which are designed as traction wheels **20**. The traction wheels **20** are connected to the traction unit **19** in a torque-transmitting manner, according to the embodiment by means of a gearbox **24**. The traction unit **19** is designed to provide a driving torque for the motor vehicle **18**. In the shown embodiment, the traction unit **19** is an internal combustion engine.

The motor vehicle **18** comprises several ECU **22.** The ECU **22** are connected to each other as CAN-nodes **22** communicating via the CAN-bus **3.** For example, the ECU **22** are control units for the headlights **23,** the traction unit **19,** air conditioning units, brakes, sensors, power windows, infotainment systems or other motor vehicle components.

A CAN-bus-system with at least three communication-conductors is provided, which makes it possible to send more communication messages with more than three different symbols.

**List of reference symbols**

| | | | | |
|---|---|---|---|---|
| 1 | CAN-bus-system | | 30 | (K-2)-th communication-conductor |
| 2 | CAN-node | | | |
| 3 | CAN-bus | | 100 | bus-system |
| 4 | first communication-conductor | | 101 | bus |
| 5 | second communication-conductor | | 102 | CAN-conductor |
| 6 | third communication-conductor | | 103 | CAN-high |
| 7 | fourth communication-conductor | | 104 | CAN-low |
| 8 | first resistor | | 105 | ECU |
| 9 | second resistor | | 106 | CAN-resistor |
| 10 | third resistor | | | |
| 11 | fourth resistor | | | |
| 12 | end of the CAN-bus | | | |
| 13 | voltage | | | |
| 14 | symbol | | | |
| 15 | prioritization level | | | |
| 16 | bit-group | | | |
| 17 | symbol-combination | | | |
| 18 | motor vehicle | | | |
| 19 | traction unit | | | |
| 20 | traction wheel | | | |
| 21 | connecting pins | | | |
| 22 | ECU | | | |
| 23 | headlight | | | |
| 24 | gearbox | | | |
| 25 | K-th resistor | | | |
| 26 | (K-1)-th resistor | | | |
| 27 | (K-2)-th resistor | | | |
| 28 | K-th communication-conductor | | | |
| 29 | (K-1)-th communication-conductor | | | |

**Claims**

1.  CAN-bus-system (1) for transmitting data between CAN-nodes (2), having at least the following components:

    - a CAN-bus (3) with a plurality of communication-conductors (4,5,6,7);
    - at least two CAN-nodes (2) which are in a data-transmitting connection by means of the communication-conductors (4,5,6,7); and
    - at least one resistor (8,9,10,11) between each two of the communication-conductors (4,5,6,7),

    **characterized in that**
    the CAN-bus (3) comprises at least three communication-conductors (4,5,6,7).

2. CAN-bus-system (1) according to claim 1, comprising

   at least four communication-conductors (4,5,6,7),
   preferably exactly four communication-conductors (4,5,6,7).

3. CAN-bus-system (1) according to claim 1 or claim 2, wherein
   each CAN-node (2) is configured to connect each of the communication-conductors (4,5,6,7) to a first electrical supply potential and to a second electrical supply potential.

4. CAN-bus-system (1) according to one of the preceding claims, comprising at least one, preferably two, supply conductors which are connectable to the communication-conductors (4,5,6,7) by means of switches of the CAN-nodes (2) as a first electrical supply potential and/or a second electrical supply potential.

5. CAN-bus-system (1) according to one of the preceding claims, wherein one resistor (8,9,10,11) per communication-conductor (4,5,6,7) is arranged between two communication-conductors (4,5,6,7) at each end (12) of the CAN-bus (3).

6. CAN-bus-system (1) according to one of the preceding claims, wherein

   each of the CAN-nodes (2) is configured to apply three different voltages (13) to the communication-conductors (4,5,6,7) across each of the resistors (8,9,10,11),
   wherein preferably the different voltages (13) are a positive voltage (13), a negative voltage (13) and a zero voltage (13),
   wherein particularly preferably the positive voltage (13) and the negative voltage (13) have the same modulus.

7. CAN-bus-system (1) according to any of the preceding claims, wherein each of the CAN-nodes (2) comprises a plurality of switches which are configured and arranged so that each of the communication-conductors (4,5,6,7) is connectable to a first electrical supply potential and a second electrical supply potential.

8. CAN-bus-system (1) according to any one of the preceding claims, wherein each CAN-node (2) comprises a switch control unit designed to control the switches of the CAN-node (2) such as to send in an arbitration phase a prioritization message comprising a sequence of symbols (14), each of the symbols (14) in the sequence of symbols (14) representing one of at least three prioritization levels (15).

9. CAN-bus-system (1) according to one of the preceding claims, wherein each of the CAN-nodes (2) is configured to modulate, by means of a switch control unit, a bit-group (16) to a symbol-combination (17) comprising a sequence of at least two symbols (14).

10. Operating method for operating a CAN-bus-system (1) according to any one of the preceding claims, comprising the following steps:

    **a.** by outputting at least one prioritization message by means of at least one of the CAN-nodes (2), performing an arbitration phase;
    **b.** by outputting a communication message with at least three symbols (14) by means of the CAN-node (2) which was dominant in the arbitration phase, transmitting information to at least one further CAN-node (2).

11. Operating method according to claim 10, wherein
    in the arbitration phase in step **a.** the prioritization message is formed on the basis of at least three different prioritization levels (15), wherein each of the prioritization levels (15) is preferably represented by means of a symbol (14).

12. Operating method according to claim 10 or claim 11, wherein
    in step **b.** the communication message is modulated on the basis of a symbol-combination (17) consisting of a sequence of at least two symbols (14), wherein each symbol-combination (17) is assigned a bit-group (16).

13. Operating method according to any one of claim 10 to claim 12, wherein each symbol (14) of the prioritization message and/or the communication message is modulated by applying
    one of three different voltages (13) across each of the resistors (8,9,10,11) by means of the corresponding CAN-node (2).

**14.** Operating method according to any one of claim 10 to claim 13, wherein a first voltage (13) out of the three voltages (13) is a positive voltage (13), a second voltage (13) is a zero voltage and a third voltage (13) is a negative voltage (13).

**15.** Motor vehicle (18) with a CAN-bus-system (1) according to one of claim (1) to claim (9), having at least the following further components:

- a traction unit (19) for providing a driving torque;
- at least one traction wheel (20) connected to the traction unit (19) in a torque-transmitting manner; and
- at least two electronic control units [ECU (22)] which are connected in a data-transmitting manner by means of the CAN-bus (3).

**Fig. 1**

**Fig. 2**

**Fig. 3**

**Fig. 4**

13     13     13        14

| | | | |
|---|---|---|---|
| 0 | 0 | 0 | $S_0$ |
| $V_R$ | $-V_R$ | 0 | $S_1$ |
| $V_R$ | 0 | $-V_R$ | $S_2$ |
| $-V_R$ | $V_R$ | 0 | $S_3$ |
| $-V_R$ | 0 | $V_R$ | $S_4$ |
| 0 | $V_R$ | $-V_R$ | $S_5$ |
| 0 | $-V_R$ | $V_R$ | $S_6$ |

## Fig. 5

13   13   13   13

14

| | | | | |
|---|---|---|---|---|
| 0 | 0 | 0 | 0 | $S_0$ |
| $V_R$ | $-V_R$ | 0 | 0 | $S_1$ |
| $V_R$ | 0 | $-V_R$ | 0 | $S_2$ |
| $V_R$ | 0 | 0 | $-V_R$ | $S_3$ |
| $-V_R$ | $V_R$ | 0 | 0 | $S_4$ |
| $-V_R$ | 0 | $V_R$ | 0 | $S_5$ |
| $-V_R$ | 0 | 0 | $V_R$ | $S_6$ |
| 0 | $V_R$ | $-V_R$ | 0 | $S_7$ |
| 0 | $V_R$ | 0 | $-V_R$ | $S_8$ |
| 0 | 0 | $V_R$ | $-V_R$ | $S_9$ |
| 0 | 0 | $-V_R$ | $V_R$ | $S_{10}$ |
| 0 | $-V_R$ | $V_R$ | 0 | $S_{11}$ |
| 0 | $-V_R$ | 0 | $V_R$ | $S_{12}$ |
| $V_R$ | $-V_R$ | $V_R$ | $-V_R$ | $S_{13}$ |
| $V_R$ | $-V_R$ | $-V_R$ | $V_R$ | $S_{14}$ |
| $V_R$ | $V_R$ | $-V_R$ | $-V_R$ | $S_{15}$ |
| $-V_R$ | $-V_R$ | $V_R$ | $V_R$ | $S_{16}$ |
| $-V_R$ | $V_R$ | $-V_R$ | $V_R$ | $S_{17}$ |
| $-V_R$ | $V_R$ | $V_R$ | $-V_R$ | $S_{18}$ |

## Fig. 6

| 13 | 13 | 13 | 14 | 15 |
|---|---|---|---|---|
| 0 | 0 | 0 | $S_0$ | 3 |
| $V_R$ | $-V_R$ | 0 | $S_1$ | 2 |
| $V_R$ | 0 | $-V_R$ | $S_2$ | 1 |
| $-V_R$ | $V_R$ | 0 | $S_3$ | * |
| $-V_R$ | 0 | $V_R$ | $S_4$ | * |
| 0 | $V_R$ | $-V_R$ | $S_5$ | * |
| 0 | $-V_R$ | $V_R$ | $S_6$ | * |

**Fig. 7**

| 13 | 13 | 13 | 13 | 14 | 15 |
|---|---|---|---|---|---|
| 0 | 0 | 0 | 0 | $S_0$ | 4 |
| $V_R$ | $-V_R$ | 0 | 0 | $S_1$ | 3 |
| $V_R$ | 0 | $-V_R$ | 0 | $S_2$ | 2 |
| $V_R$ | 0 | 0 | $-V_R$ | $S_3$ | 1 |
| $-V_R$ | $V_R$ | 0 | 0 | $S_4$ | * |
| $-V_R$ | 0 | $V_R$ | 0 | $S_5$ | * |
| $-V_R$ | 0 | 0 | $V_R$ | $S_6$ | * |
| 0 | $V_R$ | $-V_R$ | 0 | $S_7$ | * |
| 0 | $V_R$ | 0 | $-V_R$ | $S_8$ | * |
| 0 | 0 | $V_R$ | $-V_R$ | $S_9$ | * |
| 0 | 0 | $-V_R$ | $V_R$ | $S_{10}$ | * |
| 0 | $-V_R$ | $V_R$ | 0 | $S_{11}$ | * |
| 0 | $-V_R$ | 0 | $V_R$ | $S_{12}$ | * |
| $V_R$ | $-V_R$ | $V_R$ | $-V_R$ | $S_{13}$ | * |
| $V_R$ | $-V_R$ | $-V_R$ | $V_R$ | $S_{14}$ | * |
| $V_R$ | $V_R$ | $-V_R$ | $-V_R$ | $S_{15}$ | * |
| $-V_R$ | $-V_R$ | $V_R$ | $V_R$ | $S_{16}$ | * |
| $-V_R$ | $V_R$ | $-V_R$ | $V_R$ | $S_{17}$ | * |
| $-V_R$ | $V_R$ | $V_R$ | $-V_R$ | $S_{18}$ | * |

**Fig. 8**

17  16  17  16

| | | | |
|---|---|---|---|
| $S_0S_0$ | ----- | $S_4S_0$ | ----- |
| $S_0S_1$ | 00000 | $S_4S_1$ | 10101 |
| $S_0S_2$ | 00001 | $S_4S_2$ | 10110 |
| $S_0S_3$ | 00010 | $S_4S_3$ | 10111 |
| $S_0S_4$ | 00011 | $S_4S_4$ | ----- |
| $S_0S_5$ | 00100 | $S_4S_5$ | 11000 |
| $S_0S_6$ | 00101 | $S_4S_6$ | 11001 |
| $S_1S_0$ | 00110 | $S_5S_0$ | ----- |
| $S_1S_1$ | ----- | $S_5S_1$ | 11010 |
| $S_1S_2$ | 00111 | $S_5S_2$ | ----- |
| $S_1S_3$ | 01000 | $S_5S_3$ | ----- |
| $S_1S_4$ | 01001 | $S_5S_4$ | 11011 |
| $S_1S_5$ | 01010 | $S_5S_5$ | ----- |
| $S_1S_6$ | 01011 | $S_5S_6$ | 11100 |
| $S_2S_0$ | ----- | $S_6S_0$ | ----- |
| $S_2S_1$ | ----- | $S_6S_1$ | ----- |
| $S_2S_2$ | ----- | $S_6S_2$ | 11101 |
| $S_2S_3$ | 01100 | $S_6S_3$ | 11110 |
| $S_2S_4$ | 01101 | $S_6S_4$ | ----- |
| $S_2S_5$ | 01110 | $S_6S_5$ | 11111 |
| $S_2S_6$ | 01111 | $S_6S_6$ | ----- |
| $S_3S_0$ | ----- | | |
| $S_3S_1$ | 10000 | | |
| $S_3S_2$ | 10001 | | |
| $S_3S_3$ | ----- | | |
| $S_3S_4$ | 10010 | | |
| $S_3S_5$ | 10011 | | |
| $S_3S_6$ | 10100 | | |

**Fig. 9**

13  13  13  13  14  16

| | | | | | |
|---|---|---|---|---|---|
| 0 | 0 | 0 | 0 | $S_0$ | - |
| $V_R$ | $-V_R$ | 0 | 0 | $S_1$ | 0000 |
| $V_R$ | 0 | $-V_R$ | 0 | $S_2$ | 0001 |
| $V_R$ | 0 | 0 | $-V_R$ | $S_3$ | 0010 |
| $-V_R$ | $V_R$ | 0 | 0 | $S_4$ | 0011 |
| $-V_R$ | 0 | $V_R$ | 0 | $S_5$ | 0100 |
| $-V_R$ | 0 | 0 | $V_R$ | $S_6$ | 0101 |
| 0 | $V_R$ | $-V_R$ | 0 | $S_7$ | 0110 |
| 0 | $V_R$ | 0 | $-V_R$ | $S_8$ | 0111 |
| 0 | 0 | $V_R$ | $-V_R$ | $S_9$ | 1000 |
| 0 | 0 | $-V_R$ | $V_R$ | $S_{10}$ | 1001 |
| 0 | $-V_R$ | $V_R$ | 0 | $S_{11}$ | 1010 |
| 0 | $-V_R$ | 0 | $V_R$ | $S_{12}$ | 1011 |
| $V_R$ | $-V_R$ | $V_R$ | $-V_R$ | $S_{13}$ | 1100 |
| $V_R$ | $-V_R$ | $-V_R$ | $V_R$ | $S_{14}$ | 1101 |
| $V_R$ | $V_R$ | $-V_R$ | $-V_R$ | $S_{15}$ | 1110 |
| $-V_R$ | $-V_R$ | $V_R$ | $V_R$ | $S_{16}$ | 1111 |
| $-V_R$ | $V_R$ | $-V_R$ | $V_R$ | $S_{17}$ | - |
| $-V_R$ | $V_R$ | $V_R$ | $-V_R$ | $S_{18}$ | - |

**Fig. 10**

*Fig. 11*

Europäisches
Patentamt

European
Patent Office

Office européen
des brevets

# EUROPEAN SEARCH REPORT

**Application Number**

EP 23 21 7099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/273402 A1 (ZETHMAYR JON D [US]) 29 November 2007 (2007-11-29) | 1-7,9-15 | INV. H04L12/413 |
| Y | * abstract; figures 1, 1a, 1b, 2,3,4; tables 2.1, 2.2 * <br> * paragraph [0040] - paragraph [0041] * <br> * paragraph [0044] - paragraph [0045] * <br> * paragraph [0087] - paragraph [0103] * <br> ----- | 8 | H04L25/02 H04L12/40 |
| X | US 2002/186777 A1 (PERINO DONALD V [US] ET AL) 12 December 2002 (2002-12-12) <br> * abstract; figure 10 * <br> * paragraph [0070] - paragraph [0073] * <br> ----- | 1,10,15 | |
| X | US 2017/017605 A1 (SONG KEUN SOO [KR]) 19 January 2017 (2017-01-19) <br> * abstract; figure 1 * <br> * paragraph [0019] - paragraph [0025] * <br> ----- | 1,10,15 | |
| Y | US 2021/036884 A1 (WALKER STEFFEN [DE] ET AL) 4 February 2021 (2021-02-04) <br> * abstract; figure 1 * <br> * paragraph [0040] - paragraph [0048] * <br> ----- | 8 | |

**TECHNICAL FIELDS SEARCHED (IPC)**

H04L

The present search report has been drawn up for all claims

| Place of search | Date of completion of the search | Examiner |
|---|---|---|
| Munich | 29 May 2024 | Martin Bueno, Teresa |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

\& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 7099

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | Publication date | Patent family member(s) | | Publication date |
|---|---|---|---|---|
| US 2007273402 A1 | 29-11-2007 | NONE | | |
| US 2002186777 A1 | 12-12-2002 | AU | 5529698 A | 17-07-1998 |
| | | EP | 0947070 A2 | 06-10-1999 |
| | | US | 6005895 A | 21-12-1999 |
| | | US | 6359931 B1 | 19-03-2002 |
| | | US | 2002186777 A1 | 12-12-2002 |
| | | WO | 9828887 A2 | 02-07-1998 |
| US 2017017605 A1 | 19-01-2017 | KR | 20170007969 A | 23-01-2017 |
| | | US | 2017017605 A1 | 19-01-2017 |
| | | US | 2019034373 A1 | 31-01-2019 |
| US 2021036884 A1 | 04-02-2021 | CN | 111788797 A | 16-10-2020 |
| | | DE | 102018202165 A1 | 27-06-2019 |
| | | EP | 3744048 A1 | 02-12-2020 |
| | | US | 2021036884 A1 | 04-02-2021 |
| | | WO | 2019122208 A1 | 27-06-2019 |

EPO FORM P0459

For more details about this annex : see Official Journal of the European Patent Office, No. 12/82